# EUROPEAN PATENT SPECIFICATION

(11) **EP 3 032 682 B1**
(45) Date of publication and mention of the grant of the patent: **15.11.2017**
(21) Application number: 14835406.1
(22) Date of filing: 07.08.2014
(51) Int. Cl.: H02J 7/35, H02J 3/38, H01M 8/04537, H01M 16/00

(54) **POWER SUPPLY SYSTEM, POWER CONVERSION DEVICE, AND DISTRIBUTION BOARD**
STROMVERSORGUNGSSYSTEM, STROMWANDLERVORRICHTUNG UND VERTEILERTAFEL
SYSTÈME D'ALIMENTATION ÉLECTRIQUE, DISPOSITIF DE CONVERSION ÉLECTRIQUE ET TABLEAU DE DISTRIBUTION

(30) Priority: 08.08.2013 JP 2013165575
(43) Date of publication of application: 15.06.2016
(73) Proprietor: Panasonic Intellectual Property Management Co., Ltd., Osaka-shi, Osaka 540-6207 (JP)
(72) Inventor: INAKAGATA, Satoru, Chuo-ku Osaka-shi (JP)
(74) Representative: Appelt, Christian W.
(86) International application number: PCT/JP2014/004134
(87) International publication number: WO 2015/019621

(56) References cited:
- EP-A1- 2 058 921
- EP-A2- 1 970 721
- WO-A1-2008/026425
- WO-A1-2013/061826
- WO-A1-2013/061826
- WO-A1-2013/088798
- WO-A1-2013/088798
- JP-A- 2002 062 341
- JP-A- 2002 062 341
- JP-A- 2003 087 997
- JP-A- 2003 087 997
- JP-A- 2008 048 469
- JP-A- 2008 048 469
- JP-A- 2008 232 645
- JP-A- 2009 287 423
- JP-A- 2009 287 423
- JP-A- 2010 197 065
- JP-A- 2010 197 065
- JP-A- 2010 259 201
- JP-A- 2010 259 201
- JP-A- 2012 005 250
- JP-A- 2012 005 250
- JP-A- 2013 005 630
- JP-A- 2013 005 630
- JP-A- 2013 048 556
- JP-A- 2013 048 556
- JP-A- 2013 176 180

## Description

### TECHNICAL FIELD

The present invention generally relates to power supply systems, power conversion devices, and distribution boards, and more specifically relates to a power supply system with a distributed power source, a power conversion device to be used in the power supply system, and a distribution board to be used in the power supply system.

### BACKGROUND ART

A power supply system that uses a combination of a distributed power source with a power-generating function and a storage battery has conventionally been proposed (see Document 1: JP 4424912 B2, for example). The power supply system described in Document 1 uses a power-generating unit having a gas engine as the distributed power source and combines this distributed power source with an AC power unit having an uninterruptible power source.

The technique described in Document 1 uses a first sensor and a second sensor in order to detect a reverse flow of power from the power-generating unit. In other words, when the AC power is supplied from the AC power unit, the power is calculated from the current value of the AC power unit that is obtained from a detected output signal of the first sensor, and controls the output of the power-generating unit so that the power does not flow reversely toward the AC power unit. Also while the power-generating unit is running when the system is normal, the power is calculated from the current value of a commercial AC power source that is obtained from a detected output signal of the second sensor, and controls the output of the power-generating unit so that the power does not flow reversely toward the commercial AC power source.

Furthermore, the technique described in Document 1 has a switch for selecting and connecting the first sensor or the second sensor to an output control unit for controlling the output of the power-generating unit.

The configuration described in Document 1 uses the two sensors, the first sensor and the second sensor for detecting currents, to control the output of the power-generating unit in order to prevent the power from flowing reversely toward the commercial AC power source and the AC power unit. The first sensor and the second sensor are connected to the output control unit of the power-generating unit by the switch, and the detected output signal of either the first sensor or the second sensor is input to the output control unit in accordance with which one of the commercial AC power source and the AC power unit supplies power to a load.

Document 1, therefore, has a problem that not only two sensors are necessary to detect currents, but also the switch for selecting either one of the sensors is required, increasing the number of parts. Moreover, because the first sensor is provided in the AC power unit and the second sensor is provided in the commercial AC power source, the first sensor and the second sensor are positioned dispersedly, making it time-consuming to manage the first sensor and the second sensor.

Furthermore, document WO 2013/088798 A1 discloses a power supply system having a power conversion device, a switching unit, a distribute power source, a current sensor and a control unit.

### SUMMARY OF THE INVENTION

An object of the present invention is to provide a power supply system that can reduce the number of parts in a configuration that uses a distributed power source for which a reverse flow of power to a power grid is prohibited, in combination with a power source other than a grid power source. Another object of the present invention is to provide a power conversion device to be used in this power supply system and a distribution board to be used in the power supply system.

This object is solved by a power supply system according to claim 1, claims 2 to 11 refer to specifically advantageous realizations of such a power supply system. Furthermore, the present invention covers a power conversion device and a distribution board comprising such a power supply system, as defined in claims 12 and 13.

A power supply system according to the present invention has: a power conversion device that is installed in a facility of a consumer and has an independent terminal group for extracting power during a period in which power reception from a power grid is not possible; a switching unit that selects a first state in which a load is connected to the power grid during a period in which power reception from the power grid is possible, and selects a second state in which the load is connected to the independent terminal group of the power conversion device during the period in which power reception from the power grid is not possible; a distributed power source which is connected to an electrical pathway connecting the switching unit to the load and for which a reverse flow of power to the power grid is prohibited; a current sensor that monitors a current between the distributed power source and the switching unit in the electrical pathway; and a control unit that monitors a direction in which power that is output from the distributed power source is supplied, by using an output of the current sensor, wherein in response to an instruction from the control unit, the distributed power source is configured to adjust the power to output, in such a manner that power flowing from the distributed power source toward the switching unit is not generated.

A power conversion device according to the present invention is used in the foregoing power supply system, and has a converter that can be connected to a storage battery and a power source for which a reverse flow of power to the power grid is possible, and that is configured to generate power to be supplied to the power grid from the power source, and charge and discharge the storage battery.

A distribution board according to the present invention is used in the foregoing power supply system and has the switching unit, a plurality of branch breakers, and a controller.

### BRIEF DESCRIPTION OF THE DRAWINGS

Fig. 1 is a schematic configuration diagram showing a power supply system of Embodiment 1;
Fig. 2 is a block diagram showing a configuration of a distribution board to be used in the power supply system of Embodiment 1;
Fig. 3 is an operational explanatory diagram showing the relationship between consumed power and generated power in the power supply system of Embodiment 1;
Fig. 4 is a block diagram showing a configuration example of substantial parts of the power supply system of Embodiment 1;
Fig. 5 is a block diagram showing another configuration example of the substantial parts of the power supply system of Embodiment 1; and
Fig. 6 is a schematic configuration diagram showing a power supply system of Embodiment 2.

### DESCRIPTION OF EMBODIMENTS

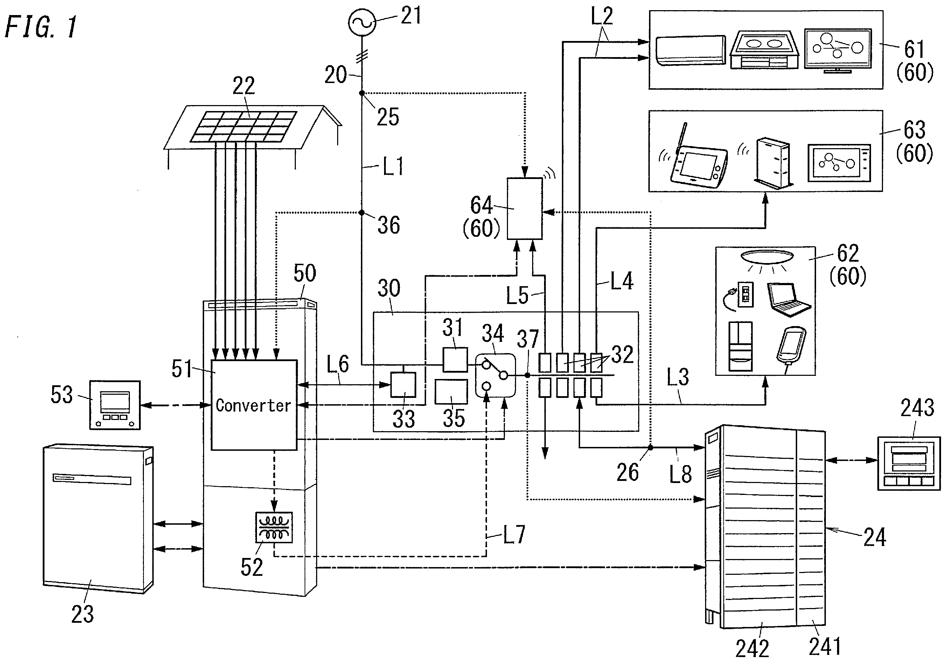

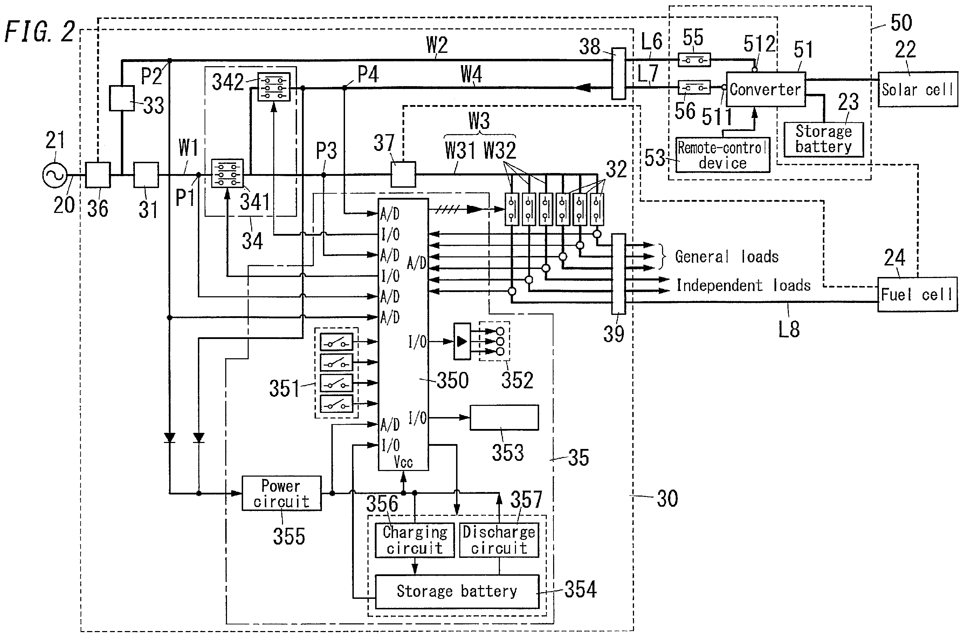

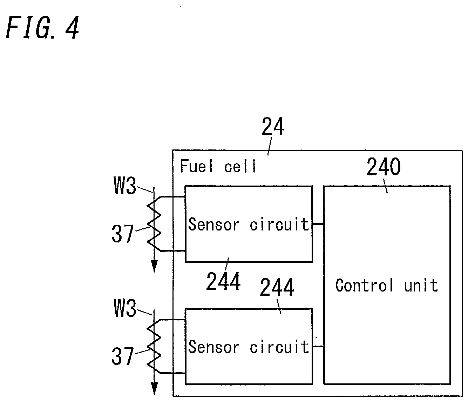

A power supply system described hereinafter has, as shown in Figs. 1 and 2, a power conversion device 50, a switching unit 34, a distributed power source (fuel cell 24), a current sensor 37, and a control unit 240 (see Fig. 4). The power conversion device 50 has an independent terminal group 511 for extracting power during a period in which power reception from a power grid 20 is not possible. The power conversion device 50 is installed in a facility of a consumer. The switching unit 34 is connected between the power grid 20 and power conversion device 50 and loads 60. The switching unit 34 selects a first state in which the loads 60 are connected to the power grid 20 during a period in which power reception from the power grid 20 is possible, and selects a second state in which the loads 60 are connected to the independent terminal group 511 during the period in which power reception from the power grid 20 is not possible. The fuel cell 24 is connected to an electrical pathway W3 that connects the switching unit 34 to the loads 60. The reverse flow of power from the fuel cell 24 to the power grid 20 is prohibited. The current sensor 37 monitors a current flowing between the fuel cell 24 and the switching unit 34 in the electrical pathway W3. The control unit 240 uses the output of the current sensor 37 to monitor the direction in which power that is output from the fuel cell 24 is supplied. In response to an instruction from the control unit 240, the fuel cell 24 is configured to adjust the power to be output, in such a manner that power flowing from the fuel cell 24 toward the switching unit 34 is not generated.

The "period in which power reception from the power grid is not possible" means a time period in which the loads 60 cannot receive power (cannot be supplied with power) from the power grid 20 as in during a power failure of the power grid 20. The "period in which power reception from the power grid is possible" means a time period in which the loads 60 can receive power (can be supplied with power) from the power grid 20.

Specifically, the power supply system has the switching unit 34 that connects the loads 60 to the power grid 20 during the period in which power reception from the power grid 20 is possible and connects the loads 60 to the independent terminal group 511 of the power conversion device 50 during the period in which power reception from the power grid 20 is not possible. Furthermore, the distributed power source (fuel cell 24) is connected to the electrical pathway W3 between the switching unit 34 and the loads 60, and the current sensor 37 for monitoring power flowing reversely from the distributed power source is disposed between the distributed power source and the switching unit 34. This configuration has the advantage that the reverse power flow can be monitored with a single current sensor 37 in a configuration in which the distributed power source, for which a reverse flow of power to the power grid 20 is prohibited, is used in combination with a power source other than a grid power source 21, reducing the number of parts.

It is preferred that the control unit 240 use the output of the current sensor 37 to determines whether the power output from the fuel cell 24 flows toward the switching unit 34 or not, and adjust the output of the fuel cell 24 in such a manner that power flowing from the fuel cell 24 toward the switching unit 34 is not generated.

It is preferred that the power supply system have a plurality of branch breakers 32 connected to the electrical pathway W3 and a controller 35 for controlling the opening/closing of the plurality of branch breakers 32. In this case, the electrical pathway W3 includes a principal electrical pathway W31 for connecting the switching unit 34 to the plurality of branch breakers 32, and a plurality of branch electrical pathways W32 for connecting a plurality of devices acting as the loads 60 to the plurality of respective branch breakers 32. It is preferred that the controller 35 have a setting unit 351 for setting, of the plurality of branch breakers 32, a branch breaker 32 to be turned on during a period in which the switching unit 34 selects the second state.

The setting unit 351 is preferably capable of performing setting such that the branch breaker 32, which is turned on during the period in which the switching unit 34 selects the second state, is turned on also during a period in which the switching unit 34 selects the first state. Alternatively, the setting unit 351 is preferably capable of performing setting such that the branch breaker 32, which is turned on during the period in which the switching unit 34 selects the second state, is turned off during the period in which the switching unit 34 selects the first state.

It is preferred that the control unit 240 receives input of a value corresponding to the output of the current sensor 37 and that the power supply system have a regulator for adjusting the ratio between the value of a current passing through the electrical pathway W3 and the value input to the control unit 240. It is preferred that the regulator be a sensor circuit 244 capable of amplifying the output of the current sensor 37 and adjusting the ratio by adjusting the amplification factor. Alternatively, a plurality of current sensors 37 of different sensitivities are preferably disposed in the electrical pathway W3, and the regulator preferably adjusts the ratio by allowing the control unit 240 to use the output of a current sensor 37 selected from among the plurality of current sensors 37.

It is preferred that the regulator change the ratio in the period in which the switching unit 34 selects the first state and the period in which the switching unit 34 selects the second state.

It is also preferred that the power conversion device 50 instruct the regulator to change the ratio.

It is preferred that the regulator be embedded in the distributed power source (fuel cell 24). Alternatively, it is preferred that the regulator have a case 245 different from the fuel cell 24.

It is preferred that the power supply system further have a backup battery (storage battery 354) for supplying power to the controller 35 during a period in which the controller 35 does not receive power from the power grid 20 nor from the power conversion device 50.

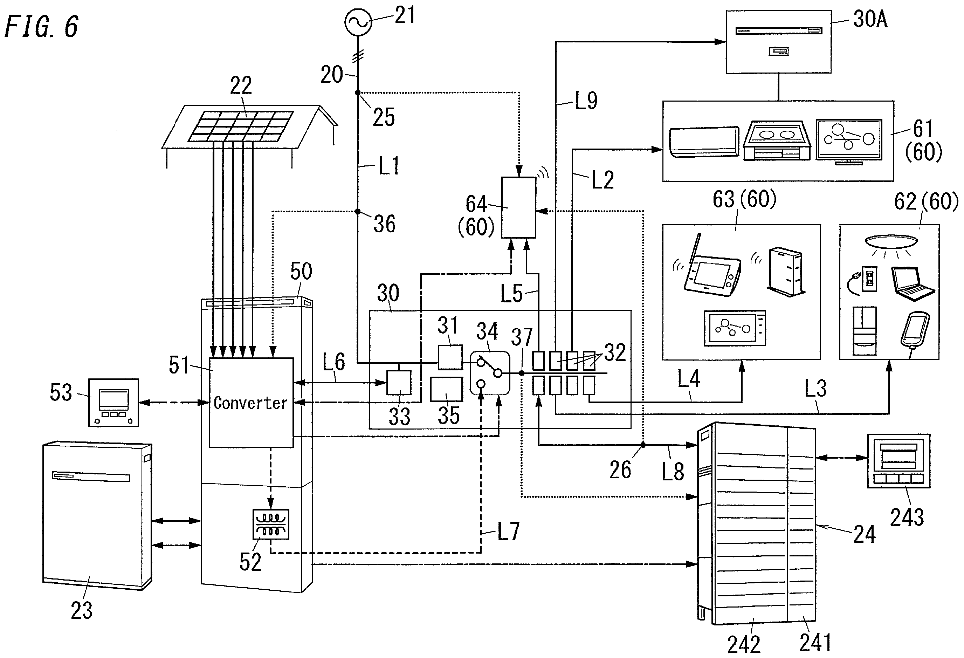

The power supply system may have a second distribution board 30A (see Fig. 6) that is connected to the secondary side of the branch breaker 32 of the plurality of branch breakers 32 that is turned on during the period in which the switching unit 34 selects the first state. The second distribution board 30A is connected to the loads 60 (general loads 61) that are supplied with power during the period in which power reception from the power grid 20 is possible.

The power conversion device 50 described hereinafter is used in any of the power supply systems described above. This power conversion device 50 has a converter 51 that can be connected to the storage battery 23 and a power source (solar cell 22) for which a reverse flow of power to the power grid 20 is possible, and that is configured to generate power to be supplied to the power grid 20 from the solar cell 22, and charge and discharge the storage battery 23.

The distribution board 30 described hereinafter is used in any of the power supply systems described above and has the switching unit 34, the plurality of branch breakers 32, and the controller 35.

The present embodiment is described hereinafter in further detail. The present embodiment is described using an example with four power sources shown in Fig. 1: the grid power source 21, the solar cell 22, the storage battery 23, and the fuel cell 24. The grid power source 21 is a power source that is supplied with power from a power supplier such as a power company through a distribution line (the power grid 20).

The fuel cell 24 used in the present embodiment is configured to use hydrogen gas that is generated by reforming a fuel gas containing methane or propane, wherein a hot water storage unit 242 is provided on the side of a power-generating unit 241 of the fuel cell 24. The hot water storage unit 242 is configured to increase the temperature of the hot water inside a hot water tank by using heat generated by the power-generating unit 241, and functions as a cogeneration device.

Specifically, the fuel cell 24 functions to both generate power and boil water. The fuel cell 24 also has an auxiliary heat source for reheating the hot water tank when the amount of heat stored in the hot water tank by increasing the temperature of the hot water is not enough. The auxiliary heat source may be used to reheat the hot water accumulated in a bathtub. The fuel cell 24 is capable of communicating with a remote control device 243 used for managing the operational state. The diagram shows only one remote control device 243, but preferably two remote control devices 243 are provided in a bathroom and a kitchen respectively.

In the present embodiment, the solar cell 22 is shown as the power source capable of allowing the power to flow reversely to the power grid 20 (i.e., supplying power to the power grid 20). As long as the power source allows the power to flow reversely to the power grid 20, the solar cell 22 can be replaced with a power source that generates power using natural energy such as wind power, hydraulic power, or geothermal heat. Moreover, the fuel cell 24 is illustrated as a distributed power source, for which the reverse flow of power to the power grid 20 is prohibited. A power-generating device that generates power using a gas engine (gas micro turbine) can be used in place of the fuel cell 24.

A user (resident) of the facility arbitrarily decides whether to install the three power sources, i.e., the solar cell 22, the storage battery 23, and the fuel cell 24 that are shown in the diagrams. In other words, these power sources are timely adopted as necessary. When the user of the facility decides to adopt these power sources, these power sources can easily be connected to a distribution wire L1 and branch lines L2, L3, L4 laid in the facility, as long as the distribution board 30 described hereinafter is installed beforehand. Moreover, when using the solar cell 22 or the storage battery 23 as the power source, the power conversion device 50 is necessary in order to convert power between AC and DC.

The distribution board 30 has a case (not shown) that incorporates internally a principal breaker 31 connected to the distribution wire L1 and the plurality of branch breakers 32 for dividing power at the load side of the principal breaker 31. The principal breaker 31 has an electrical leak detection function. Some of the branch breakers 32 are connected to the electric loads 61 by the branch lines L2, other branch breakers 32 are connected to electric loads 62 by the branch lines L3, and still other branch breakers 32 are connected to management devices 63 by the branch lines L4. One of the branch breakers 32 is connected to a measuring device 64 by a connection line L5, and another one of the branch breakers 32 is connected to the fuel cell 24 by a connection line L8. As described hereinafter, the branch breakers 32 are each configured to be turned off (opened) upon passage of an abnormal current and opened/closed by an opening/closing signal issued from the outside. This type of breaker is configured not only as a breaker but also as an electric relay and is known as a remote-controlled breaker.

The electric loads 61 are supplied with power only during a period in which power is supplied from the grid power source 21, and the electric loads 62 are supplied with power from both the grid power source 21 and the foregoing power source. In other words, even during a power failure of the grid power source 21, the electric loads 62 are supplied with power as long as power can be output from any of the solar cell 22, the storage battery 23, and the fuel cell 24. Hereinafter, the electric loads 61 that are no longer supplied with power during a power failure of the grid power source 21 are called "general loads," and the electric loads 62 that are supplied with power even during a power failure of the grid power source 21 are called "independent loads."

Some of the branch breakers 32 provided in the distribution board 30 are provided in a pathway that supplies power to the management devices 63 and the measuring device 64. The management devices 63 communicate with the general loads 61, the independent loads 62, and the measuring device 64 in order to manage the operational states of the general loads 61 and independent loads 62 and the operational state of the measuring device 64. A wired or wireless communication path may be used for the communications between the management devices 63 and the general loads 61, independent loads 62 and measuring device 64.

The management devices 63 have, for example, a display device configured by a flat panel display such as a liquid crystal display, and an input device configured by a touch panel stacked on the screen of the display device, as man-machine interfaces. Information obtained by having the management devices 63 monitor the general loads 61, independent loads 62 and measuring device 64 are displayed on the display device, and the input device is operated to send an instruction from the management devices 63 to the general loads 61, independent loads 62, and measuring device 64.

The measuring device 64 has a function of monitoring the power passing through the distribution board 30 and a function of monitoring the outputs of current sensors 25, 26 described hereinafter. As to the distribution board 30, the measuring device 64 preferably measures a total of power consumed by the facility and the power of each of the branch lines L2, L3. The measuring device 64 is capable communicating with the power conversion device 50. The power conversion device 50 and the measuring device 64 communicate with each other through a communication path shown by a dashed line. The power conversion device 50 and the measuring device 64 perform serial communication compliant with, for example, RS485 standard. The power conversion device 50 and the measuring device 64 do not have to perform communication in accordance with the specification compliant with RS485 standard and can perform communication using a power line carrier communication technique by means of a wireless communication path or wired communication path. These communication techniques may be combined with each other.

As shown in the diagram, the general loads share a common reference numeral "61", the independent loads also share a common reference numeral "62", and the management device still also share a common reference numeral "63", but the reference numerals 61, 62 and 63 represent these individual devices. Note that the general loads 61, the independent loads 62, the management devices 63, and the measuring device 64 are described as "loads 60" when not distinguished from one another.

Incidentally, the distribution board 30 has an interconnected breaker 33 and the switching unit 34 in the case, the interconnected breaker 33 being connected to the primary electrical pathway (the distribution wire L1) of the principal breaker 31 and the switching unit 34 being inserted into the secondary electrical pathway of the principal breaker 31 that is connected to the branch breakers 32. The principal breaker 31 and the interconnected breaker 33 are connected to the distribution wire L1.

The distribution board 30 is also provided with the controller 35 that enables monitoring of the power passing through the principal breaker 31, the branch breakers 32, and the interconnected breaker 33 and operation of the switching unit 34. The controller 35 has a function of monitoring and controlling the branch breakers 32 and the switching unit 34 in the distribution board 30 and displaying the monitored states. The configuration of the controller 35 is described hereinafter.

The interconnected breaker 33 forms a path through which the power generated by the solar cell 22 is supplied to the primary electrical pathway of the principal breaker 31, and a path that uses the power received from the grid power source 21 for charging the storage battery 23. The interconnected breaker 33 is a so-called remote-controlled breaker and is turned on and off by the instructions from the power conversion device 50.

The switching unit 34 is an electromagnetic contactor with a transfer contact (a relay that has a contact having a large current capacity) and selects any one of a first state in which the principal breaker 31 is connected to all of the branch breakers 32 and a second state in which the principal breaker 31 is disconnected from all of the branch breakers 32. In a state in which the switching unit 34 disconnects the principal breaker 31 from the branch breakers 32, the power conversion device 50 is connected to the branch breakers 32.

In the illustrated example, the solar cell 22 and the storage battery 23 are connected to the power conversion device 50. The power conversion device 50 has the converter 51 for converting DC power generated by the solar cell 22 into AC power and a transformer 52 for phase transformation from two-phase to three-phase.

The converter 51 has a first conversion circuit for converting DC power generated by the solar cell 22 into AC power equivalent to that of the grid power source 21, and a second conversion circuit for charging and discharging the storage battery 23. The converter 51 has a first connection part connected to the interconnected breaker 33 and a second connection part for supplying power to the transformer 52.

The first connection part is connected to the power grid 20 by the interconnected breaker 33 to establish grid interconnection. Specifically, the first connection part is of the single-phase three-wire type that is connected to the interconnected breaker 33 by a connection line L6 and to the distribution wire L1, the primary electrical pathway of the principal breaker 31, by the interconnected breaker 33. Hereinafter, the first connection part of the converter 51 is referred to as "interconnected terminal group" 512 (see Fig. 2). The interconnected terminal group 512 inputs and outputs power. Power that is input from the interconnected terminal group 512 is originally from the grid power source 21, and power that is output from the interconnected terminal group 512 is originally from the power generated by the solar cell 22 or the power discharged from the storage battery 23. The interconnected terminal group 512 has at least a pair of interconnected terminals, and a voltage between these interconnected terminals is determined based on a line voltage of the power grid 20.

The second connection part, on the other hand, does not output power to the transformer 52 during the period in which power reception from the grid power source 21 is possible, but outputs power to the transformer 52 during the period in which power reception from the grid power source 21 is not possible. Hereinafter, the second connection part of the converter 51 is referred to as "independent terminal group" 511 (see Fig. 2). The independent terminal group 511 is of the single-phase two-wire type that is connected to the primary side of the transformer 52 by two wires and outputs power only to the transformer 52. The power that is output from the independent terminal group 511 is originally from the solar cell 22 or the storage battery 23. The independent terminal group 511 has a pair of independent terminals, and a voltage between these independent terminals is kept at a constant voltage (e.g., 200 V).

The converter 51 determines whether power reception from the grid power source 21 is possible or not, by monitoring the voltage between the pair of interconnected terminals of the interconnected terminal group 512 that is connected to the power grid 20 by the interconnected breaker 33.

Incidentally, the secondary side of the transformer 52 is of the single-phase three-wire type and connected to one of the contacts of the switching unit 34 by the connection line L7. Note that the solid arrow in Fig. 1 shows a flow of power in the state in which power reception from the power grid 20 is possible, and the dashed arrow shows a flow of power obtained during a power failure in which power reception from the power grid 20 is not possible.

The power conversion device 50 communicates with the remote-control device 53 in order to enable instruction and monitoring of an operation performed by the user. The remote-control device 53 has a function of making an operation state of the power conversion device 50 visible and a function of selecting an operation mode of the power conversion device 50. Operation modes of the power conversion device 50 are described hereinafter. Whether the converter 51 outputs power of the solar cell 22 and of the storage battery 23 from the interconnected terminal group 512 or from the independent terminal group 511 is determined based on whether power reception from the grid power source 21 is possible and based on the operation mode of the power conversion device 50.

The current sensor 25 is disposed in the distribution wire L1 on the primary side of the principal breaker 31 in the facility in order to measure the power received from the power grid 20. Furthermore, a current sensor 36 for detecting a reverse flow of power to the grid power source 21 is disposed between the current sensor 25 and the principal breaker 31 in the distribution wire L1. The current sensor 36 monitors the current at a position near the grid power source 21 with respect to the connecting point between the principal breaker 31 and the interconnected breaker 33 in the distribution wire L1.

The current sensor 25 is connected to the measuring device 64. The measuring device 64 measures the power received from the power grid 20 based on the current value measured by the current sensor 25. The measuring device 64 acquires information on the power generation amount of the solar cell 22 and information on charging and discharging of the storage battery 23, by communicating with the converter 51. The output of the current sensor 36 is input to the converter 51, and the converter 51 determines, based on the output of the current sensor 36, whether there exists a reverse flow of power from the facility to the power grid 20. The current sensor 36 is disposed so as to detect individual currents passing through two voltage lines of the single-phase three wires.

Whether there exists a reverse flow of power from the facility to the power grid 20 is determined using the relationship between the phase of the current monitored by the current sensor 36 and the phase of the voltage between the pair of interconnected terminals of the interconnected terminal group 512. The voltage between the pair of interconnected terminals of the interconnected terminal group 512 is the same voltage as and has the same phase as the line voltage of the distribution wire L1 connected electrically to the interconnected terminal group 512. Therefore, the converter 51 determines whether there exists a reverse power flow or not, by using the waveform of the voltage between the pair of interconnected terminals of the interconnected terminal group 512, the waveform of the current monitored by the current sensor 36, and the sign of the integral value obtained by integrating the power with respect to each cycle of the voltage waveform.

As the specific configuration of the current sensors 25, 36, a current transformer provided with a core such as a toroidal core is assumed, but a core-less coil (a so-called Rogowski coil) or a magnetic sensor may be used. This applies to current sensors 26, 37 described hereinafter, and the specific configuration of the current sensors 26, 37 conforms to the configuration of the current sensor 25, 36.

Incidentally, one of the plurality of branch breakers 32 is connected to the fuel cell 24 by the connection line L8. The fuel cell 24, therefore, is capable of supplying power to the corresponding load 60 through the branch breaker 32. However, in the present embodiment, the power generated by the fuel cell 24 is not allowed to flow reversely to the power grid 20, as with the power stored in the storage battery 23. In other words, the fuel cell 24 adjusts its output in such a manner that the loads 60 consume all the power to be output.

The current sensor 37 is provided in an electrical pathway between the switching unit 34 and the branch breakers 32 in order to monitor whether there exists power that is not consumed by the loads 60. In addition, the current sensor 26 is disposed in the connection line L8 connecting the fuel cell 24 to the branch breakers 32, in order to monitor the power generated by the fuel cell 24. The output of the current sensor 26 is input to the measuring device 64, and the measuring device 64 manages the power that passes through the connection line L8.

The output of the current sensor 37 is input to the fuel cell 24, and the fuel cell 24 determines, based on the output of the current sensor 37, whether or not the power that is output from the fuel cell 24 is consumed by the loads 60. Whether or not the power not consumed by the loads 60 is included in the power that is output from the fuel cell 24, is determined based on the phase relationship between voltage and current, as is the case with the output of the current sensor 36.

Through communication with the power conversion device 50, the fuel cell 24 is notified from the power conversion device 50 of a signal representing whether power reception from the power grid 20 is possible or not. In other words, the fuel cell 24 is notified of whether the converter 51 of the power conversion device 50 outputs power from the interconnected terminal group 512 or the independent terminal group 511. The dashed line connecting the power conversion device 50 and the fuel cell 24 to each other in the diagram represents a path through which the power conversion device 50 sends the signal to the fuel cell 24.

Describing the configuration shown in Fig. 1 based mainly on the distribution board 30, the configuration shown in Fig. 2 is obtained. In this illustrated example, the current sensors 36, 37 are embedded in the distribution board 30 and the storage battery 23 is embedded in the power conversion device 50. Also, in the illustrated example, the switching unit 34 is configured by a first switch 341 for grid interconnection that is connected to the interconnected terminal group 512 and a second switch 342 for independent operation that is connected to the independent terminal group 511. The first switch 341 and the second switch 342 are controlled by the controller 35 so as not to be turned on simultaneously. Specifically, the controller 35 controls the switching unit 34 by providing a period in which the first switch 341 and the second switch 342 are off and a period in which only one of these switches is on.

Basically the first switch 341 is on during the period in which power reception from the grid power source 21 is possible (power reception period), and the second switch 342 is on during the period in which power reception from the grid power source 21 is not possible (power failure period). The first switch 341 and the second switch 342 are turned off at the same time during a transition period between the power reception period and the power failure period of the grid power source 21. The controller 35 monitors the voltages obtained at points P1 to P4 shown in Fig. 2, and switches the switching unit 34 in accordance with the voltages of the points P1 to P4. This operation is described hereinafter.

The distribution board 30 has a first terminal block 38 to which the power conversion device 50 is connected and a second terminal block 39 connected to the secondary side of the branch breakers 32. The first terminal block 38 is connected to the power conversion device 50 by the connection line L6 and the connection line L7. In the diagram, a switch 55 is connected to the interconnected terminal group 512 of the first converter 51, and a switch 56 is connected to the independent terminal group 511 (or the transformer 52) of the first converter 51. Therefore, either the interconnected terminal group 512 or the independent terminal group 511 is connected to the distribution board 30 by turning either the switch 55 or the switch 56 on. On the other hand, the loads 60 are connected to the second terminal block 39, and the fuel cell 24, too, is connected to the second terminal block 39 by the connection line L8.

The distribution board 30 has four electrical pathways as the principal electrical pathways, the four electrical pathways being the electrical pathway W1 between the principal breaker 31 and the switching unit 34, the electrical pathway W2 between the interconnected breaker 33 and the first terminal block 38, the electrical pathway W3 configuring the primary side of each branch breaker 32, and the electrical pathway W4 between the first terminal block 38 and the switching unit 34.

When the controller 35 turns the first switch 341 on, the principal breaker 31 is connected to the branch breakers 32 by the electrical pathways W3, and the converter 51 of the power conversion device 50 (see Fig. 1) is connected to the principal breaker 31 by the second electrical pathway W2. Thus, power is supplied from both the grid power source 21 and the power conversion device 50 to the branch breakers 32.

On the other hand, when the controller 35 turns the second switch 342 on, the transformer 52 of the power conversion device 50 (the independent terminal group 511 of the converter 51) is connected to the branch breakers 32 by the electrical pathways W3 and the electrical pathway W4. Because the first switch 341 is off at this moment, power of the grid power source 21 is not supplied to the branch breakers 32. When the fuel cell 24 is connected to the branch breakers 32, the power conversion device 50 and the fuel cell 24 act as the power sources to supply power to the branch breakers 32.

The controller 35 has a control unit 350 configured using a microcomputer having an A/D converter and an interface portion. However, the control unit 350 does not have to be configured using a microcomputer that integrally has a processor and a memory; thus, the control unit 350 may be configured with an individual part.

The control unit 350 has a function of controlling the opening/closing of the branch breakers 32 and switching unit 34 and a function of monitoring the power passing through the branch breakers 32. The opening/closing of the branch breakers 32 and switching unit 34 is controlled by the control unit 350 in accordance with the states of the voltages of the electrical pathways W1 to W3 described above. In addition, although not shown, in response to an instruction from the power conversion device 50 through the communication with the power conversion device 50, the control unit 350 controls the switching of the switching unit 34.

The controller 35 further has the setting unit 351 for setting the operation of the control unit 350 and an indicator light 352 and a display unit 353 for showing the switching state of the switching unit 34. For example, a light-emitting diode is used as the indicator light 352, and a liquid crystal display is used as the display unit 353.

The setting unit 351 is provided for the purpose of setting a branch breaker 32 to be turned on out of the plurality of branch breakers 32, during the power failure period of the grid power source 21. In other words, during the period in which supply of power from the grid power source 21 is discontinued and the switching unit 34 selects the power conversion device 50, and when available power is limited, the branch breaker 32 to be turned on can be selected using the setting unit 351. This configuration curbs power consumption by turning only a specific branch breaker 32 on.

Specifically, during the period in which the switching unit 34 selects the power conversion device 50, it becomes possible to turn on the branch breaker 32 that is provided in the pathway for supplying power to an independent load 62 to be turned on at the time of a power failure and the management devices 63 and measuring device 64 that are required to keep supplying power regardless of the presence of a power failure. The setting unit 351 sets beforehand which one of the branch breakers 32 to turn on during a power failure of the grid power source 21.

It is preferred that the setting unit 351 have a function of selecting a branch breaker 32 to turn on regardless of the presence of a power failure of the grid power source 21, and a function of selecting a specific branch breaker 32 to turn on only during the period in which power is not supplied from the grid power source 21. With the latter function, any specific independent load 62 can be operated only at the time of a power failure of the grid power source 21.

Power for operating the controller 35 is received from the electrical pathway W2 or the electrical pathway W4 or from the battery embedded in the distribution board 30 (the storage battery 354). A power circuit 355 for converting AC power into DC power is used in order to receive power from the electrical pathway W2 or the electrical pathway W4. The power circuit 355 outputs power for operating an internal circuit of the controller 35 (the control unit 350 or the like) during a period in which power is supplied from the grid power source 21, the solar cell 22, the storage battery 23, or the fuel cell 24.

In a case where power is not obtained from any of the grid power source 21, the solar cell 22, the storage battery 23 and the fuel cell 24, the power of the backup battery embedded in the distribution board 30 (the storage battery 354) is supplied to the internal circuit of the controller 35. During a period in which the output of the power circuit 355 is obtained, the storage battery 354 is charged with the power from the power circuit 355 through a charging circuit 356. When the output of the power circuit 355 is no longer obtained, power is supplied to the internal circuit of the controller 35 through a discharge circuit 357. Note that although the backup battery is the storage battery 354 in the illustrated example, the backup battery can be replaced with a primary battery. The charging circuit 356 is not necessary when a primary battery is used.

The operations of the present embodiment are now described hereinafter. An operation mode of the power conversion device 50 is selected using the remote-control device 53. Any one of at least three operation modes of the power conversion device 50 can be selected: an economy-preferential mode (first operation mode), an environment-preferential mode (second operation mode), and a stored-power-preferential mode (third operation mode).

The economy-preferential mode is an operation mode that aims to reduce the price of power purchased from the grid power source 21 and to increase the profit obtained as a result of a reverse flow of power to the distribution wire L1. The environment-preferential mode is an operation mode that aims to reduce the amount of power purchased from the grid power source 21. The stored-power-preferential mode is an operation mode that always keeps the storage battery 23 almost fully charged when supply of power from the grid power source 21 is discontinued.

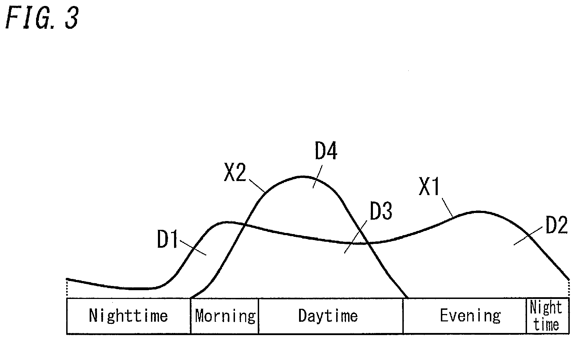

Let it be assumed that the power consumed by the loads 60 fluctuates as shown by a characteristic X1 in Fig. 3 and that the power generated by the solar cell 22 fluctuates as shown by a characteristic X2 in Fig. 3. The vertical axis of Fig. 3 represents power. The total power consumed by the loads 60 of the facility is referred to as "consumed power," hereinafter. The consumed power is measured by the measuring device 64 based on the output of a current sensor, not shown, that is provided in the distribution board 30.

The lower part of Fig. 3 shows time zones such as "nighttime," "morning," "daytime," and "evening." These time zones, "morning," "daytime," "evening" and "nighttime" each correspond to the unit price of electricity charge incurred from purchasing power from the grid power source 21, wherein "nighttime" corresponds to the time zone of the lowest unit price of electricity charge, and the "daytime" and "evening" each correspond to a time zone of a high electricity charge. Furthermore, the "morning" and "daytime" each represent a time zone where the amount of power generated by the solar cell 22 is relatively high. The "evening" represents a time zone where generation of power by the solar cell 22 is almost discontinued, and the "nighttime" represents a time zone where power is not obtained from the solar cell 22.

Four regions D1 to D4 shown in Fig. 3 can be obtained by combining the characteristic X1 with the characteristic X2. The regions D1 and D2 each mean that the power generated by the solar cell 22 (generated power) is lower than the power consumed by the loads 60 (consumed power), meaning that power needs to be supplied to the loads 60 from a power source other than the solar cell 22. The region D3 means that the consumed power is covered by the generated power, and the region D4 represents a surplus obtained by subtracting the consumed power from the generated power (referred to as "surplus power" hereinafter).

The economy-preferential mode is operated in such a manner that when the surplus power of the region D4 is generated, an income can be derived from selling power by making a reverse flow of the surplus power to the distribution wire L1. The storage battery 23 is charged not with the power generated by the solar cell 22 but with the power received from the grid power source 21 in the "nighttime" where the unit price of electricity charge is low. Also, the storage battery 23 is discharged in the "daytime" and the "evening," if necessary. In other words, during a period in which the consumed power can be compensated by the power generated by the solar cell 22, a reverse flow of the surplus power is made. On the other hand, during a period in which the consumed power cannot be compensated by the power generated by the solar cell 22, the power of the storage battery 23 is used to limit the power received from the power grid 20.

In the environment-preferential mode, the surplus power of the region D4 is used to charge the storage battery 23. The storage battery 23 is discharged in the "evening" and "nighttime" during which power cannot be obtained from the solar cell 22, and the discharged power is applied toward the consumed power. In this case, when the consumed power is not compensated by the power stored in the storage battery 23, the deficit power is received from the grid power source 21, reducing the amount of power received from the grid power source 21. As a result, most of the power applied toward the consumed power becomes renewable energy, accomplishing a reduction of the environmental load.

In the stored-power-preferential mode, the storage battery 23 is charged almost to its full regardless of the power generated by the solar cell 22. Once the charging is complete, the storage battery 23 is simply trickle-charged to be kept fully charged, and waits without being discharged. In this case, once the supply of power from the grid power source 21 is discontinued, the power stored in the storage battery 23 is used to begin power supply.

As described above, the storage battery 23 is discharged whenever necessary in the environment-preferential mode, and discharge thereof is permitted only in the "daytime" and "evening" in the economy-preferential mode. In the present embodiment, collaboration with the fuel cell 24 is established during these periods in which discharge of the storage battery 23 is permitted.

However, the power generated by the fuel cell 24 has an upper limit. A combination of the solar cell 22 and the fuel cell 24 is defined in such a manner that this upper limit becomes approximately a fraction of the maximum power generated by the solar cell 22. For instance, a combination of the solar cell 22 and the fuel cell 24 in which the maximum power generated by the solar cell 22 is 3 kW and the upper limit of the power generated by the fuel cell 24 is 750 W is employed.

When the power consumed by the loads 60 is equal to or lower than the upper limit of the power output by the fuel cell 24 during the period in which discharge of the storage battery 23 is permitted, the power generated by the fuel cell 24 is applied toward the consumed power. On the other hand, when the power consumed by the loads 60 exceeds the upper limit of the power output by the fuel cell 24 during this period, the power stored in the storage battery 23 is applied toward the deficit power.

Note that the storage battery 23 is not charged from the fuel cell 24 in the "nighttime" during which the storage battery 23 is charged in the economy-preferential mode, in the time zone during which the storage battery 23 is charged by the surplus power in the environment-preferential mode, and in a state in which the stored-power-preferential mode is selected. In other words, because the current sensor 37 provided at the upstream side of the branch breakers 32 in the distribution board 30 is connected to the fuel cell 24, whether all the power that is output from the fuel cell 24 is consumed by the loads 60 or not can be managed.

Operations under the assumption of the environment-preferential mode are now simply described hereinafter. During a period such as a nighttime in which the solar cell 22 does not generate power, and when the remaining capacity of the storage battery 23 is equal to or greater than a lower limit that is set beforehand, the converter 51 supplies power to the distribution wires of the facility by using the power of the storage battery 23. In so doing, the converter 51 monitors the output of the current sensor 36 and adjusts the output so that no power is supplied from the storage battery 23 to the power grid 20. Specifically, the converter 51 adjusts the output in such a manner that the power discharged from the storage battery 23 does not exceed the power consumed by the loads 60.

The control unit 350 monitors the voltages of the points P1 to P4 shown in Fig. 2, and controls the first switch 341, the second switch 342, and the branch breakers 32, as described above. The control unit 350 also monitors the voltage on the secondary side of the each branch breaker 32. The point P1 is set on the electrical pathway W1 between the principal breaker 31 and the switching unit 34 (the first switch 341), and the point P2 is set on the electrical pathway W2 between the interconnected breaker 33 and the first terminal block 38. The point P3 is set on the electrical pathway W3 between the branch breakers 32 and the switching unit 34, at the primary side of the branch breakers 32. The point P4 is set on the electrical pathway W4 between the first terminal block 38 and the switching unit 34.

The control unit 350 of the distribution board 30 determines that power reception from the grid power source 21 is possible, when the voltage at the point P1 shown in Fig. 2 is equal to the voltage of the grid power source 21 (e.g., 200 V), and then turns the first switch 341 on. Once the first switch 341 is turned on, the power of the grid power source 21 and the power of the power conversion device 50 are supplied to the branch breakers 32 through the principal breaker 31, and then to the load 60 that is connected to the ON branch breaker 32.

The control unit 350 monitors an abnormal condition such as adhesion of a contact of the first switch 341, in accordance with the relationship between the voltages of the points P1, P3 and an instruction to open/close the first switch 341. For instance, when a voltage is detected at the point P3 during a period in which the controller 35 instructs the first switch 341 and the second switch 342 to turn off, the control unit 350 determines that contact adhesion is occurring in the first switch 341 or the second switch 342.

Incidentally, the type of the load 60 that is supplied with power during the ON period of the first switch 341 can be selected by the setting unit 351, and also the type of the load 60 that is supplied with power during the ON period of the second switch 342 can be selected by the setting unit 351, as described above. In other words, in accordance with the settings of the setting unit 351, the control unit 350 selects a branch breaker 32 to be turned on upon reception of power from the grid power source 21, and also selects a branch breaker 32 to be turned on upon a power failure of the grid power source 21.

Normally, the branch breakers 32 connected with the general loads 61 are turned on upon reception of power from the grid power source 21 and turned off upon a power failure of the grid power source 21. The branch breakers 32, to which the independent loads 62, the management devices 63 and the measuring device 64 are connected, are turned on, regardless of the possibility of power reception from the grid power source 21 or the presence of a power failure of the grid power source 21. Needless to say, depending on the types of the independent loads 62 connected to the corresponding branch breakers 32, the branch breakers 32 may be turned on only at the time of a power failure of the grid power source 21. The branch breaker 32 to which the fuel cell 24 is connected by the connection line L8 is controlled so as to be turned on in the period in which power is received from the grid power source 21 and the period in which a power failure occurs in the grid power source 21.

The control unit 350 can find the period in which grid interconnection is established by receiving power from the grid power source 21 (period in which power reception from the power grid is possible) and the period in which a power failure occurs in the grid power source 21 and consequently the independent operation is performed (period in which power reception from power grid is not possible), in accordance with the relationship among the voltages of the points P1 to P4. The control unit 350 can also find out whether any of the contacts of the switching unit 34 is in an abnormal condition or not, in accordance with the relationship among the voltages of the points P1 to P4. The indicator light 352 displays whether the grid interconnection or the independent operation is performed, as well as, whether an abnormal condition of any of the contacts of the switching unit 34 has occurred. The display unit 353 displays a set condition set by the setting unit 351, power passing through each branch breaker 32, and the like.

When a power failure occurs in the grid power source 21, the line voltage of the power grid 20 becomes 0, and eventually the voltage between the pair of interconnected terminals of the interconnected terminal group 512 of the converter 51 becomes 0. Consequently, voltage is no longer detected at the point P1. When voltage is no longer detected at the point P1, the control unit 350 turns the first switch 341 off. Furthermore, the power conversion device 50 recognizes a power failure of the grid power source 21 because the voltage between the pair of interconnected terminals of the interconnected terminal group 512 is 0, sends an OFF instruction to the interconnected breaker 33, and starts outputting power from the independent terminal group 511. At this moment, the voltage of the point P2 is 0 and a voltage is obtained from the point P4, allowing the power circuit 355 to receive power from the independent terminal group 511 of the power conversion device 50.

When the voltage of the point P4 rises, the control unit 350 turns the second switch 342 on and supplies power from the independent terminal group 511 of the power conversion device 50 to the branch breakers 32. In so doing, the control unit 350 turns on the branch breakers 32 to which the loads 60 selected by the setting unit 351 are connected. In other words, the control unit 350 turns on the branch breakers 32 to which are connected the loads 60 supplied with power at the time of the independent operation. The branch breakers 32 may be turned on simultaneously, but it is preferred that the branch breakers 32 be turned on sequentially for the reason of preventing the occurrence of an inrush current. Supply of power from an independent output of the power conversion device 50 to the loads 60 is started as a result of the branch breakers 32 being turned on. At this moment, it is preferred that power be supplied to the management devices 63 and the measuring device 64 prior to the other loads 60.

Once the grid power source 21 is restored, the power conversion device 50 detects that the voltage of the interconnected terminal group 512 is restored, and stops outputting from the independent terminal group 511. Since the first switch 341 is off at this moment, voltage is no longer obtained from the point P4. After confirming that the voltage of the point P4 is 0, the control unit 350 turns the second switch 342 off. In addition, after confirming that the voltage of the point P1 and the voltage of the point P2 are restored, the control unit 350 turns the first switch 341 on. Specifically, the branch breakers 32 are connected to the principal breaker 31, and power is supplied from the grid power source 21 to the respective loads 60.

Incidentally, during the transition period between the grid interconnection (the period in which power reception from the power grid 20 is possible) and the independent operation (the period in which power reception from the power grid 20 is not possible), there exists a period in which power is not supplied to the electrical pathway W3. The controller 35 acquires power through the electrical pathway W2 and the electrical pathway W4 but cannot acquire the power when the interconnected breaker 33 is blocked and until the output of the independent terminal group 511 of the power conversion device 50 rises. For this reason, the backup storage battery 354 is provided, so that the storage battery 354 is charged during the grid interconnection and the independent operation, and the controller 35 is continuously run by the power of the storage battery 354 during the transition period between the grid interconnection and the independent operation. When the storage battery 354 is fully charged, the charging circuit 356 stops the charging of the storage battery 354 in response to an instruction from the control unit 350.

Incidentally, when the fuel cell 24 is provided as described in the present embodiment, the power that is output from the fuel cell 24 is adjusted in accordance with the relationship between the power consumed by the loads 60 and the power output by the power conversion device 50. The power that is output from the fuel cell 24 is prohibited from flowing reversely to the power grid 20 during the grid interconnection. Moreover, because the power that is output from the fuel cell 24 is supplied to the loads 60 together with the power that is output from the power conversion device 50, the fuel cell 24 is prohibited from generating effective power using the power conversion device 50 as a load.

In the present embodiment, therefore, the output of the current sensor 37 is used to monitor whether the power that is output from the fuel cell 24 includes power that is not consumed by the loads 60. The current sensor 37 is disposed between the branch breaker 32 connected to the fuel cell 24 and the switching unit 34. In other words, the current sensor 37 is disposed on the electrical pathway W3 that connects the power grid 20 and the fuel cell 24 to each other during the grid interconnection and is shared during the grid interconnection and the independent operation.

According to this configuration, the power that is output from the fuel cell 24 is supplied to the electrical pathway W3 and therefore can be used in the grid interconnection and/or the independent operation. Moreover, the current sensor 37 monitors the current of the electrical pathway W3 and therefore monitors the current of the same section, regardless of the grid interconnection or the independent operation. The current sensor 37 then monitors, during the grid interconnection, whether the power flows reversely from the fuel cell 24 to the power grid 20, and monitors, during the independent operation, whether there exists power flowing from the fuel cell 24 toward the power conversion device 50. In other words, with the output of this single current sensor 37, a flow of power (direction of power) can be monitored during the grid interconnection and the independent operation.

By making the output of the current sensor 37 invalid, power can be supplied from the fuel cell 24 to the storage battery 23, and such an operation may be permitted through communication between the power conversion device 50 and the fuel cell 24.

The current sensor 37 monitors whether or not a current flows from the fuel cell 24 toward the switching unit 34 regardless of the grid interconnection or independent operation, as described above. On the other hand, the power consumed by the loads 60 during the independent operation is considered to be lower than the power consumed by the loads 60 during the grid interconnection. Thus, the range of output of the current sensor 37 (range) fluctuates between the grid interconnection and the independent operation.

The power that is output by the fuel cell 24 is controlled by the control unit 240 in response to the outputs of current sensors 37, as shown in Fig. 4. The outputs of the current sensors 37 are rectified and then smoothed out by sensor circuits 244 functioning as a regulator. The outputs are then amplified and input to the control unit 240. Based on the outputs of the current sensors 37, the control unit 240 determines whether the power that is output from the fuel cell 24 flows toward the switching unit 34 or not, and adjusts the output of the fuel cell 24 so as not to generate power flowing toward the switching unit 34.

In other words, the control unit 240 uses the output of the current sensor 37 to monitor the direction in which the power that is output from the fuel cell 24 functioning as a distributed power source is supplied. In response to an instruction from the control unit 240, the fuel cell 24 functioning as a distributed power source adjusts the power to be output, in such a manner that power flowing from the fuel cell 24 toward the switching unit 34 is not generated.

Note that the control unit 240 may use at least the output of the current sensor 37 to determine the direction of the power that is output from the fuel cell 24, i.e., whether the power that is output from the fuel cell 24 flows toward the switching unit 34 or not. For instance, the control unit 240 may determine the direction of the power that is output from the fuel cell 24, by means of the relationship between the phase of the current monitored by the current sensor 37 and the phase of the voltage output by the fuel cell 24. Specifically, the control unit 240 determines the direction of the power by using the waveform of the voltage output by the fuel cell 24 and the waveform of the current monitored by the current sensor 37, as well as the sign of the integral value obtained by integrating the power with respect to each cycle of the voltage waveform.

An amplifier for amplifying the output of the current sensor 37 at the sensor circuit 244 functioning as a regulator is configured using, for example, an operational amplifier. This amplifier may be a single power supply inverting amplifier. Also, it is preferred that the operational amplifier be a low saturation amplifier that can handle an input voltage around 0 V.

Preferably, the sensitivity of the control unit 240 for determining the direction of the power that is output from the fuel cell 24 does not fluctuate between the grid interconnection and the independent operation. On the other hand, the range of the current sensor 37 is considered to fluctuate between the grid interconnection and the independent operation, as described above. In the present embodiment, the amplification factor obtained at the sensor circuit 244 is changed at the time of the grid interconnection and at the time of the independent operation, so that the range of voltages input from the sensor circuit 244 to the control unit 240 does not change significantly between the grid interconnection and the independent operation. The amplification factor obtained at the sensor circuit 244 is equivalent to the ratio between the value of the current passing through the electrical pathway W3 and the input to the control unit 240. This ratio here is the same as the ratio between the output value of the current sensor 37 and the input value of the control unit 240.

Specifically, the control unit 240 adjusts the amplification factor of the sensor circuit 244 in such a manner that the amplification factor of the sensor circuit 244 is higher during the independent operation than during the grid interconnection. According to this configuration, the control unit 240 can always detect the direction of the power output from the fuel cell 24 with approximately a constant accuracy, without causing significant fluctuation of the range of voltages input from the sensor circuit 244 to the control unit 240, between the grid interconnection and the independent operation. Note that the information indicating which one of the grid interconnection and the independent operation is performed, is reported to the fuel cell 24 by the power conversion device 50.

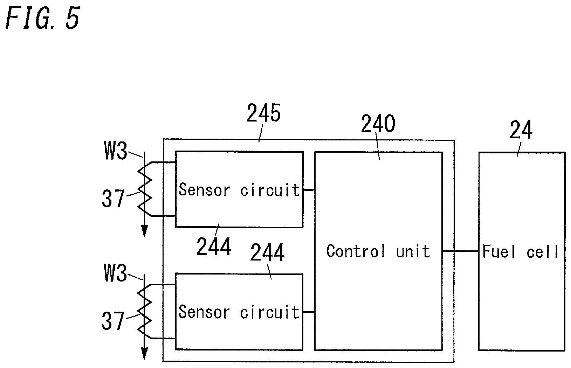

Fig. 4 shows a configuration in which the control unit 240 and the sensor circuit 244 are incorporated in the fuel cell 24. However, as shown in Fig. 5, the control unit 240 and the sensor circuit 244 may be housed in the case 245 different from the fuel cell 24. According to this configuration, which one of the grid interconnection and the independent operation is performed, is reported to the fuel cell 24 and the control unit 240 separately or reported to the control unit 240 through the fuel cell 24.

Furthermore, in the illustrated example, the current sensor 37 is provided for the purpose of monitoring currents passing through two respective voltage lines of the single-phase three wires, and the sensor circuit 244 is provided with respect to each current sensor 37. Note that in the configuration example described above, the amplification factor of the sensor circuit 244 is changed in the grid interconnection and in the independent operation; however, a plurality of current sensors 37 with different sensitivities may be provided and the current sensors 37 to be used at the time of the grid interconnection and at the time of the independent operation respectively may be selected.

In the configuration example described above, the amplification factor of the sensor circuit 244 or the sensitivity of the current sensor 37 is changed between the grid interconnection and the independent operation. The amplification factor of the sensor circuit 244 or the sensitivity of the current sensor 37 is changed for the purpose of curbing changes in the range of voltages input from the sensor circuit 244 to the control unit 240, as described above. Specifically, the sensor circuit 244 functioning as a regulator may be configured to adjust the ratio between the value of the current passing through the electrical pathway W3 and the input to the control unit 240. Therefore, the amplification factor of the sensor circuit 244 or the sensitivity of the current sensor 37 may be changed based on the conditions such as the grid interconnection and the independent operation, as well as other conditions under which the range of voltages input to the control unit 240 changes. In addition, changing the amplification factor of the sensor circuit 244 and changing the sensitivity of the current sensor 37 may be combined.

### (Embodiment 2)

According to the configuration example described above, the loads 60 are connected to the branch breakers 32 respectively, and the setting unit 351 provided in the controller 35 selects electric loads (i.e., the independent loads 62, the management devices 63, and the measuring device 64) to be supplied with power at the time of a grid power failure. In other words, the setting unit 351 eliminates the general loads 61 that are not supplied with power during a period of a grid power failure. Therefore, at the time of a grid power failure, the general loads 61 can be eliminated more easily when the plurality of general loads 61 are connected altogether to one branch breaker 32 than when the plurality of general loads 61 are connected to the respective branch breakers 32.

Therefore, as shown in Fig. 6, it is preferred to provide a second distribution board 30A to which the general loads 61 are connected altogether and to supply power from one of the branch breakers 32 provided in the distribution board 30 to the second distribution board 30A through a power line L9. It is preferred that the power line L9 be of the single-phase three-wire type. It should be noted that a total of the power consumed by the general loads 61 is expected to be higher than a total of the power consumed by the independent loads 62 and the management devices 63. For this reason, the rating (current capacity) of the branch breaker 32 to which the power line L9 is connected needs to be greater than those of the other branch breakers 32.

Owing to the configuration shown in Fig. 6, the controller 35 of the distribution board 30 can easily perform control at the time of a grid power failure, such as stopping the supply of power to the general loads 61 at once by turning off the branch breaker 32 connected to the second distribution board 30A. The other configurations and operations are the same as those described in Embodiment 1.

## Claims

1. A power supply system, comprising:
a power conversion device (50) that is installed in a facility of a consumer and has an independent terminal group (511) for extracting power during a period in which power reception from a power grid (20) is not possible;
a switching unit (34) that is connected between the power grid (20) and power conversion device (50) and a load (60), selects a first state in which the load (60) is connected to the power grid (20) during a period in which power reception from the power grid (20) is possible, and selects a second state in which the load (60) is connected to the independent terminal group (511) during the period in which power reception from the power grid (20) is not possible;
a distributed power source which is connected to an electrical pathway (W3) connecting the switching unit (34) to the load (60) and for which a reverse flow of power to the power grid (20) is prohibited;
a current sensor (37) that monitors a current flowing between the distributed power source and the switching unit (34) in the electrical pathway (W3);
a control unit (240) that monitors a direction in which power that is output from the distributed power source is supplied, by using an output of the current sensor (37);
**characterized in that** the power supply system further comprises
a plurality of branch breakers (32) connected to the electrical pathway (W3); and
a controller (35) for controlling opening/closing of the plurality of branch breakers (32),
wherein in response to an instruction from the control unit (240), the distributed power source is configured to adjust the power to output, in such a manner that power flowing from the distributed power source toward the switching unit (34) is not generated,
wherein the electrical pathway (W3) includes a principal electrical pathway (W31) for connecting the switching unit (34) to the plurality of branch breakers (32), and a plurality of branch electrical pathways (W32) for connecting a plurality of devices functioning as the load (60) to the plurality of branch breakers (32) respectively,
the control unit (240) is configured to receive input of a value corresponding to an output of the current sensor (37), and
the power supply system further comprises a regulator for adjusting a ratio between a value of a current passing through the electrical pathway (W3) and the value input to the control unit (240),
the current sensor (37) comprises a plurality of current sensors (37) that are disposed in the electrical pathway (W3) and have sensitivities different from one another, and
the regulator is configured to adjust the ratio by allowing the control unit (240) to use an output of a current sensor (37) selected from among the plurality of current sensors (37).

2. The power supply system according to claim 1, wherein the control unit (240) is configured to determine, by using the output of the current sensor (37), whether the power that is output from the distributed power source flows toward the switching unit (34) or not, and adjust the output of the distributed power source in such a manner that the power flowing from the distributed power source toward the switching unit (34) is not generated.

3. The power supply system according to claim 1 or 2, wherein the controller (35) has a setting unit (351) for setting, of the plurality of branch breakers (32), a branch breaker (32) to be turned on during a period in which the switching unit (34) selects the second state.

4. The power supply system according to claim 3, wherein the setting unit (351) is configured to perform setting such that the branch breaker (32), which is turned on during the period in which the switching unit (34) selects the second state, is turned on also during a period in which the switching unit (34) selects the first state.

5. The power supply system according to claim 3, wherein the setting unit (351) is configured to perform setting such that the branch breaker (32), which is turned on during the period in which the switching unit (34) selects the second state, is turned off during a period in which the switching unit (34) selects the first state.

6. The power supply system according to any one of claims 1 to 5, wherein the regulator is configured to make the ratio different between a period in which the switching unit (34) selects the first state and a period in which the switching unit (34) selects the second state.

7. The power supply system according to claim 6, wherein the power conversion device (50) is configured to instruct the regulator to change the ratio.

8. The power supply system according to any one of claims 1 to 7, wherein the regulator is embedded in the distributed power source.

9. The power supply system according to any one of claims 1 to 7, wherein the regulator has a case (245) different from the distributed power source.

10. The power supply system according to any one of claims 1 to 9, further comprising a backup battery for supplying power to the controller (35) during a period in which the controller (35) is not supplied with power from neither the power grid (20) nor the power conversion device (50).

11. The power supply system according to any one of claims 1 to 10, further comprising a second distribution board (30A) that is connected to a secondary side of the branch breaker (32) of the plurality of branch breakers (32) that is turned on during a period in which the switching unit (34) selects the first state, and is connected to a load (60) that is supplied with power during the period in which power reception from the power grid (20) is possible.

12. A power conversion device (50) to be used in the power supply system of any one of claims 1 to 11, comprising a converter that can be connected to a storage battery (23) and a power source for which a reverse flow of power to the power grid (20) is possible, and that is configured to generate power to be supplied to the power grid (20) from the power source, and charge and discharge the storage battery (23).

13. A distribution board (30) to be used in the power supply system of any one of claims 1 to 11, comprising the switching unit (34), the plurality of branch breakers (32), and the controller (35).

## Patentansprüche

1. Stromversorgungssystem, aufweisend:
einen Stromwandler (50), der in einer Einrichtung eines Verbrauchers installiert ist und eine unabhängig Anschlussgruppe (511) hat, die zur Entnahme von Strom während einer Zeitspanne dient, in der eine Stromaufnahme von einem Stromnetz (20) her nicht möglich ist;
eine Schalteinheit (34), die zwischen das Stromnetz (20) und den Stromwandler (50) und eine Last (60) geschaltet ist, einen ersten Zustand wählt, in dem die Last (60), die während einer Zeitspanne, in der eine Stromaufnahme von dem Stromnetz (20) möglich ist, mit dem Stromnetz (20) verbunden ist, und einen zweiten Zustand wählt, in dem die Last (60) während der Zeitspanne, in der eine Stromaufnahme von dem Stromnetz (20) nicht möglich ist, mit der unabhängigen Anschlussgruppe (511) verbunden ist;
eine dezentrierte Stromquelle, die mit einem Strompfad (W3) verbunden ist, der die Schalteinheit (34) mit der Last (60) verbindet, und für die ein umgekehrter Stromfluss zu dem Stromnetz (20) verhindert ist;
einen Stromsensor (37), der einen Strom überwacht, der in dem Strompfad (W3) zwischen der dezentrierten Stromquelle und der Schalteinheit (34) fließt;
eine Steuereinheit (240), die eine Richtung überwacht, in der Strom, der von der dezentrierten Stromquelle ausgegeben wird, unter Verwendung eines Ausgangssignals des Stromsensors (37) zugeführt wird;
**dadurch gekennzeichnet, dass** das Stromversorgungssystem ferner aufweist:
mehrere Zweigunterbrecher (32), die mit dem Strompfad (W3) verbunden sind; und
eine Steuereinrichtung (35) zum Steuern eines Öffnens/Schließens der mehreren Zweigunterbrecher (32),
wobei die dezentrierte Stromquelle dazu eingerichtet ist, in Antwort auf einen Befehl von der Steuerungseinheit (240), den Strom zu dem Ausgang in der Weise anzupassen, dass Strom, der von der dezentrierten Stromquelle in Richtung der Schalteinheit (34) fließt, nicht erzeugt wird,
wobei der Strompfad (W3) einen Hauptstrompfad (W31), um die Schalteinheit (34) mit den mehreren Zweigunterbrechern (32) zu verbinden, und mehrere Zweigstrompfade (W32) beinhaltet, um mehrere Vorrichtungen, die als die Verbraucher (60) wirken, jeweils mit den mehreren Zweigunterbrechern (32) zu verbinden,
wobei die Steuerungseinheit (240) dazu eingerichtet ist, eine Eingabe eines Werts zu empfangen, der einem Ausgangssignal des Stromsensors (37) entspricht, und
das Stromversorgungssystem ferner einen Regler aufweist, der dazu dient, ein Verhältnis zwischen einem Wert eines Stroms, der durch den Strompfad (W3) fließt, und dem Wert, der in die Überwachungseinheit (240) eingegeben wird, einzustellen,
wobei der Stromsensor (37) mehrere Stromsensoren (37) enthält, die in dem Strompfad (W3) angeordnet sind und Empfindlichkeiten aufweisen, die sich voneinander unterscheiden, und
wobei der Regler dazu eingerichtet ist, das Verhältnis anzupassen, indem der Steuerungseinheit (240) erlaubt wird, ein Ausgangssignal eines Stromsensors (37) zu nutzen, der unter den mehreren Stromsensoren (37) ausgewählt wird.

2. Stromversorgungssystem nach Anspruch 1, wobei die Steuerungseinheit (240) dazu eingerichtet ist, unter Verwendung des Ausgangssignals des Stromsensors (37) zu ermitteln, ob der Strom, der von der dezentrierten Stromquelle ausgegeben wird, in Richtung der Schalteinheit (34) fließt, oder ob nicht, und die Ausgabe der dezentrierte Stromquelle in eine derartigen Weise anzupassen, dass der Strom der von der dezentrierten Stromquelle in Richtung der Schalteinheit (34) fließt, nicht erzeugt wird.

3. Stromversorgungssystem nach Anspruch 1 oder 2, wobei die Steuereinrichtung (35) eine Einstelleinheit (351) zum Einstellen der mehreren Zweigunterbrecher (32) aufweist, wobei ein Zweigunterbrecher (32) während einer Zeitspanne einzuschalten ist, in der die Schalteinheit (34) den zweiten Zustand wählt.

4. Stromversorgungssystem nach Anspruch 3, wobei die Einstelleinheit (351) dazu eingerichtet ist, das Einstellung derart durchzuführen, dass der Zweigunterbrecher (32), der während der Zeitspanne eingeschaltet wird, in der die Schalteinheit (34) den zweiten Zustand wählt, auch während einer Zeitspanne eingeschaltet wird, in der die Schalteinheit (34) den ersten Zustand wählt.

5. Stromversorgungssystem nach Anspruch 3, wobei die Einstelleinheit (351) dazu eingerichtet ist, eine Einstellung derart durchzuführen, dass der Zweigunterbrecher (32), der während der Zeitspanne eingeschaltet wird, in der die Schalteinheit (34) den zweiten Zustand wählt, während einer Zeitspanne, in der die Schalteinheit (34) den ersten Zustand wählt, ausgeschaltet wird.

6. Stromversorgungssystem nach einem beliebigen der Ansprüche 1 bis 5, wobei der Regler dazu eingerichtet ist, das Verhältnis zwischen einer Zeitspanne, in der die Schalteinheit (34) den ersten Zustand wählt, und einer Zeitspanne, in der die Schalteinheit (34) den zweiten Zustand wählt, unterschiedlich zu gestalten.

7. Stromversorgungssystem nach Anspruch 6, wobei der Stromwandler (50) dazu eingerichtet ist, dem Regler zu befehlen, das Verhältnis zu ändern.

8. Stromversorgungssystem nach einem beliebigen der Ansprüche 1 bis 7, wobei der Regler in die dezentrierte Stromquelle eingebettet ist.

9. Stromversorgungssystem nach einem beliebigen der Ansprüche 1 bis 7, wobei der Regler ein Gehäuse (245) aufweist, das sich von der dezentrierten Stromquelle unterscheidet.

10. Stromversorgungssystem nach einem beliebigen der Ansprüche 1 bis 9, ferner mit einer Reservebatterie, um der Steuereinrichtung (35) während einer Zeitspanne Strom zuzuführen, in der der Steuereinrichtung (35) weder von dem Stromnetz (20) noch von dem Stromwandler (50) Strom zugeführt wird.

11. Stromversorgungssystem nach einem beliebigen der Ansprüche 1 bis 10, ferner mit einer zweiten Verteilertafel (30A), die mit einer sekundären Seite des Zweigunterbrechers (32) der mehreren Zweigunterbrecher (32) verbunden ist, der während einer Zeitspanne, in der die Schalteinheit (34) den ersten Zustand wählt, eingeschaltet ist und mit einer Last (60) verbunden ist, die während der Zeitspanne, in der eine Stromaufnahme von dem Stromnetz (20) möglich ist, mit Strom versorgt wird.

12. Stromwandler (50), der in dem Stromversorgungssystem nach einem beliebigen der Ansprüche 1 bis 11 zu verwenden ist und einen Konverter aufweist, der mit einer Akkumulatorbatterie (23) und einer Stromquelle verbunden werden kann, für die ein umgekehrter Stromfluss zu dem Stromnetz (20) möglich ist, und der dazu eingerichtet ist, Strom zu erzeugen, der dem Stromnetz (20) von der Stromquelle her zuzuführen ist, und die Akkumulatorbatterie (23) zu laden und zu entladen.

13. Verteilertafel (30), die in dem Stromversorgungssystem nach einem beliebigen der Ansprüche 1 bis 11, zu verwenden ist und die Schalteinheit (34), die mehreren Zweigunterbrecher (32) und die Steuereinrichtung (35) enthält.

## Revendications

1. Système d'alimentation électrique comprenant :
un dispositif de conversion de puissance (50) qui est installé dans une installation d'un consommateur et qui comprend un groupe terminal indépendant (511) pour l'extraction d'une puissance pendant une période au cours de laquelle la réception d'une puissance à partir d'un réseau d'alimentation (20) n'est pas possible ;
une unité de commutation (34) qui est connectée entre le réseau d'alimentation (20) et le dispositif de conversion de puissance (50) et une charge (60), qui sélectionne un premier état dans lequel la charge (60) est connectée au réseau d'alimentation (20) pendant une période au cours de laquelle une réception de puissance à partir du réseau d'alimentation (20) est possible et qui sélectionne un deuxième état dans lequel la charge (60) est connectée au groupe terminal indépendant (511) pendant la période au cours de laquelle une réception de puissance à partir du réseau d'alimentation (20) n'est pas possible ;
une source de puissance distribuée qui est connectée à un trajet électrique (W3) connectant l'unité de commutation (34) à la charge (60) et pour lequel un flux inverse de puissance vers le réseau d'alimentation (20) est interdit ;
un capteur de courant (37) qui surveille un courant qui s'écoule entre la source de puissance distribuée et l'unité de commutation (34) dans le trajet électrique (W3) ;
une unité de commande (240) qui surveille une direction dans laquelle la puissance générée à partir de la source de puissance distribuée est introduite, en utilisant une sortie du capteur de courant (37) ;
**caractérisé en ce que** le système d'alimentation électrique comprend en outre
une pluralité de disjoncteurs divisionnaires (32) connectés au trajet électrique (W3) ; et
un contrôleur (35) pour le contrôle de l'ouverture/fermeture de la pluralité de disjoncteurs divisionnaires (32), la source de puissance distribuée étant conçue pour ajuster la puissance à émettre en réponse à une instruction provenant de l'unité de commande (240), de façon à ce que la puissance qui s'écoule de la source de puissance distribuée vers l'unité de commutation (34) ne soit pas générée,
le trajet électrique (W3) comprenant un trajet électrique principal (W31) pour connecter l'unité de commutation (34) à la pluralité de disjoncteurs divisionnaires (32) et une pluralité de trajets électriques ramifiés (W32) pour connecter une pluralité de dispositifs fonctionnant en tant que charge (60) à la pluralité de disjoncteurs divisionnaires (32)
l'unité de commande (240) étant conçue pour recevoir une entrée d'une valeur correspondant à une sortie du capteur de courant (37), et
le système d'alimentation électrique comprend en outre un régulateur pour ajuster un rapport entre une valeur d'un courant traversant le trajet électrique (W3) et la valeur entrée dans l'unité de commande (240),
le capteur de courant (37) comprend une pluralité de capteurs de courant (37) qui sont disposés dans le trajet électrique (W3) et qui présentent des sensibilités différentes entre eux et
le régulateur est conçu pour ajuster le rapport en permettant à l'unité de commande (240) d'utiliser une sortie d'un capteur de courant (37) sélectionné parmi la pluralité de capteurs de courant (37).

2. Système d'alimentation électrique selon la revendication 1, dans lequel l'unité de commande (240) est conçue pour déterminer, à l'aide de la sortie du capteur de courant (37) si la puissance émise à partir de la source de puissance distribuée s'écoule vers l'unité de commutation (34) ou non, et pour ajuster la sortie de la source de puissance distribuée de façon à ce que la puissance qui s'écoule de la source de puissance distribuée vers l'unité de commutation (34) ne soit pas générée.

3. Système d'alimentation électrique selon la revendication 1 ou 2, dans lequel le contrôleur (35) comprend une unité de réglage (351) pour le réglage, parmi la pluralité de disjoncteurs divisionnaires (32), d'un disjoncteur divisionnaire (32) à activer pendant une période au cours de laquelle l'unité de commutation (34) sélectionne le deuxième état.

4. Système d'alimentation électrique selon la revendication 3, dans lequel l'unité de réglage (351) est conçue pour effectuer un réglage de façon à ce que le disjoncteur divisionnaire (32) qui est activé pendant la période au cours de laquelle l'unité de commutation (34) sélectionne le deuxième état soit activé également pendant une période au cours de laquelle l'unité de commutation (34) sélectionne le premier état.

5. Système d'alimentation électrique selon la revendication 3, dans lequel l'unité de réglage (351) est conçue pour effectuer un réglage de façon à ce que le disjoncteur divisionnaire (32) qui est activé pendant la période au cours de laquelle l'unité de commutation (34) sélectionne le deuxième état soit désactivé pendant une période au cours de laquelle l'unité de commutation (34) sélectionne le premier état.

6. Système d'alimentation électrique selon l'une des revendications 1 à 5, dans lequel le régulateur est conçu pour rendre le rapport différent entre une période au cours de laquelle l'unité de commutation (34) sélectionne le premier état et une période au cours de laquelle l'unité de commutation (34) sélectionne le deuxième état.

7. Système d'alimentation électrique selon la revendication 6, dans lequel le dispositif de conversion de puissance (50) est conçu pour ordonner au régulateur de modifier le rapport.

8. Système d'alimentation électrique selon l'une des revendications 1 à 7, dans lequel le régulateur est intégré dans la source de puissance distribuée.

9. Système d'alimentation électrique selon l'une des revendications 1 à 7, dans lequel le régulateur (245) comprend un boîtier différent de la source de puissance distribuée.

10. Système d'alimentation électrique selon l'une des revendications 1 à 9, comprenant en outre une batterie de secours permettant d'alimenter le contrôleur (35) pendant une période au cours de laquelle le contrôleur (35) n'est alimenté ni par le réseau d'alimentation (20) ni par le dispositif de conversion de puissance (50).

11. Système d'alimentation électrique selon l'une des revendications 1 à 10, comprenant en outre un deuxième panneau de distribution (30A) qui est connecté à un côté secondaire du disjoncteur divisionnaire (32) de la pluralité de disjoncteurs divisionnaires (32) qui est activé pendant une période au cours de laquelle l'unité de commutation (34) sélection le premier état, et qui est connecté à une charge (60) qui est alimentée pendant la période au cours de laquelle une réception de puissance à partir du réseau d'alimentation (20) est possible.

12. Dispositif de conversion de puissance (50) destiné à être utilisé dans le système d'alimentation selon l'une des revendications 1 à 11, comprenant un convertisseur qui peut être connecté à une batterie de stockage (23) et une source de puissance pour laquelle un flux inverse de puissance vers le réseau d'alimentation (20) est possible et qui est conçue pour générer une puissance à introduire dans le réseau d'alimentation (20) à partir de la source de puissance et pour charger et décharge la batterie de stockage (23).

13. Panneau de distribution (30) destiné à être utilisé dans le système d'alimentation selon l'une des revendications 1 à 11, comprenant l'unité de commutation (34), la pluralité de disjoncteurs divisionnaires (32) et le contrôleur (35).
